# EUROPEAN PATENT SPECIFICATION

(11) **EP 2 264 597 B1**
(45) Date of publication and mention of the grant of the patent: **22.02.2012**
(21) Application number: 10154947.5
(22) Date of filing: 26.02.2010
(51) Int. Cl.: G06F 11/14

(54) **Backing up and/or restoring a software application so as to facilitate compatibility checking with a target device prior to application restore**
Sichern und/oder Wiederherstellen einer Softwareanwendung zur Ermöglichung der Kompatibilitätsprüfung mit einer Zielvorrichtung vor der Anwendungswiederherstellung
Sauvegarde et/ou restauration d'une application logicielle afin de faciliter la vérification de compatibilité avec un dispositif cible avant de restaurer l'application

(30) Priority: 18.06.2009 US 218212 P
(43) Date of publication of application: 22.12.2010
(73) Proprietor: RESEARCH IN MOTION LIMITED, Waterloo, Ontario N2L 3W8 (CA)
(72) Inventor: Landry, Paul, Edward, Waterloo Ontario N2L 3R9 (CA)
(74) Representative: MERH-IP Matias Erny Reichl Hoffmann

(56) References cited:
- US-A1- 2006 230 081
- US-A1- 2008 250 082
- US-A1- 2009 041 230

## Description

### BACKGROUND

This disclosure pertains to the back-up of software applications from computing devices such as mobile communication devices and to the restoring of backed-up software applications to target devices such as mobile communication devices.

When a software application is backed-up from a mobile communication device using conventional techniques, restoration of the application to a different mobile communication device may fail in some circumstances.

For background information, US 2006/0230081 A1 discloses a method and apparatus for backing up and restoring data from/to wireless computing devices utilizing strongly collision free deterministic identifiers, such as hash values, to avoid multiple instances of the same backed up or restored data. US 2008/0250082 A1 discloses a method of backing up and restoring data in a computing device in which integrity checking is performed upon file restoration, wherein the integrity checking is the same as what was performed upon original file installation.

### BRIEF DESCRIPTION OF THE DRAWINGS

In the figures which illustrate an exemplary embodiment:

FIG. 1 is a schematic diagram illustrating an exemplary system for backing up and/or restoring software applications;

FIG. 2 is a schematic view of a first mobile communication device of FIG. 1;

FIG. 3 illustrates metadata associated with one of the software applications of FIG. 1;

FIG. 4 is a flowchart illustrating operation of a computer in the system of FIG. 1 for backing up a software application;

FIG. 5 illustrates metadata, in the form of a markup language document, that is created during the back-up of one of the software applications; and

FIG. 6 is a flowchart illustrating operation of the computer of the system of FIG. 1 for restoring a software application.

### SUMMARY OF THE INVENTION

The invention is defined by the independent claims. There is provided a method, at a computer, of handling back-up of a software application from a mobile communication device, that is interconnected, via a wireless connection, with the computer, the method comprising: uploading, from the mobile communication device, a plurality of application modules collectively comprising the software application; generating, at said computer, metadata describing, for each of said application modules, a compatibility of said application module with at least one mobile communication device model, and a compatibility of said application module with at least one application programming interface 'API' version of a mobile communication device operating system; and associating said uploaded application modules with said metadata, wherein said generating comprises: ascertaining a model of said mobile communication device and an API version of the operating system of said mobile communication device, said ascertaining comprising intercommunicating with said mobile communication device; and for each of said application modules of said plurality: encoding, within said metadata, a compatibility of said application module with the ascertained model of said mobile communication device; and further encoding, within said metadata, a compatibility of said application module with the ascertained API version of the operating system of said mobile communication device.

There is provided a method, at a computer, of restoring, to a target mobile communication device that is interconnected, via a wireless connection, with said computer, a software application previously backed-up from a mobile communication device, the method comprising: ascertaining a model of said target mobile communication device and an application programming interface 'API' version of the operating system of said target mobile communication device, said ascertaining comprising intercommunicating with said mobile communication device; and using metadata associated with said backed up software application, verifying, for each of a plurality of application modules collectively comprising the backed-up software application: a compatibility of said application module with the ascertained model of said target mobile communication device; and a compatibility of said application module with the ascertained model of said target mobile communication device; and a compatibility of said application module with the ascertained API version of said target mobile communication device; and if said verifying is successful, downloading said application modules and said metadata to said target mobile communication device.

In yet another embodiment, there is provided a computer comprising a processor that, upon execution of software loaded from a computer-readable medium, causes said computer to perform the steps of the above method.

In yet another embodiment, there is provided a computer-readable medium storing software that, when executed by a processor of a computer, causes said computer to perform the steps of the above method.

### DETAILED DESCRIPTION

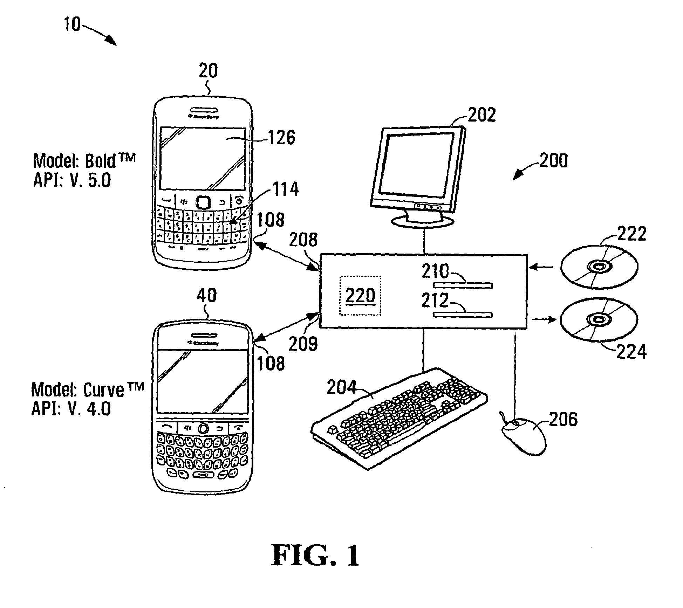

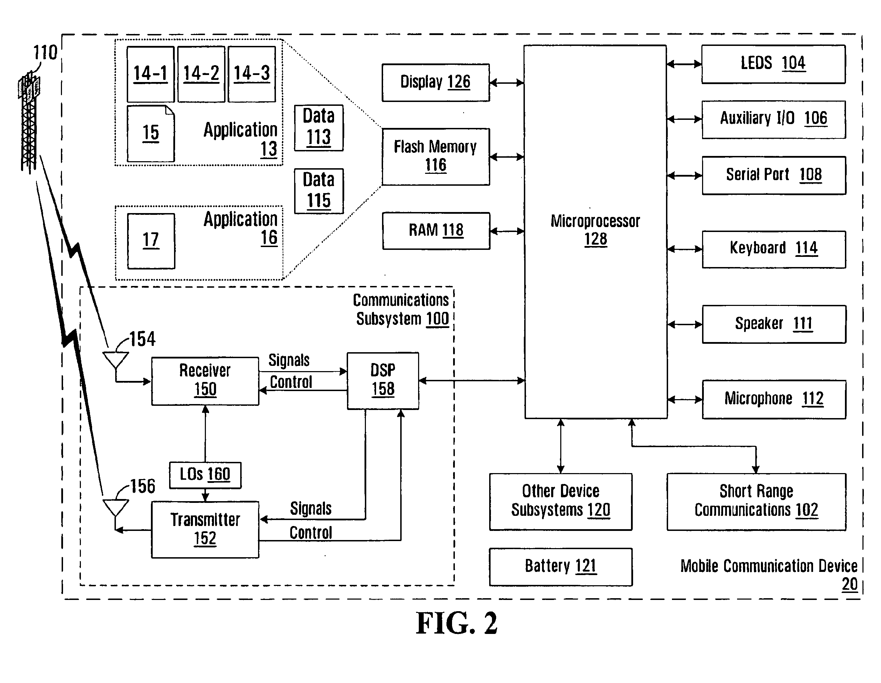

FIG. 1 illustrates an exemplary system 10 for backing up and/or restoring software applications so as to facilitate compatibility checking with target devices prior to application restore. The system 10 includes first and second hand-held mobile communication devices (or simply "mobile devices") 20 and 40 interconnected with a computer 200. The first mobile communication device is illustrated in more detail in FIG. 2.

Referring to FIG. 2, a mobile communication device 20 is shown to include a housing, an input device (a keyboard 114), and an output device (a display 126), which is preferably a full graphic Liquid Crystal Display (LCD). Other types of output devices may alternatively be utilized. A processing device (a microprocessor 128) is shown schematically in FIG. 2 as coupled between the keyboard 114 and the display 126. The microprocessor 128 controls the operation of the display 126, as well as the overall operation of the mobile device 20, in response to actuation of keys on the keyboard 114 by a user.

The housing may be elongated vertically, or may take on other sizes and shapes (including clamshell housing structures). The keyboard may include a mode selection key, or other hardware or software for switching between text entry and telephony entry.

In addition to the microprocessor 128, other parts of the mobile device 20 are shown schematically in FIG. 2. These include: a communications subsystem 100; a short-range communications subsystem 102; the keyboard 114 and the display 126, along with other input/output devices including a set of auxiliary I/O devices 106, a serial port 108, a speaker 111 and a microphone 112; as well as memory devices including a flash memory 116, a Random Access Memory (RAM) 118, an internal mass store 144; and various other device subsystems 120. The mobile device 20 may have a battery 121 to power the active elements of the mobile device 20. The mobile device 20 is preferably a two-way radio frequency (RF) communication device having voice and data communication capabilities. In addition, the mobile device 20 preferably has the capability to communicate with other computer systems via the Internet.

Operating system software executed by the microprocessor 128 is preferably stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device may also be stored to the RAM 118.

The microprocessor 128, in addition to its operating system functions, enables execution of software applications on the mobile device 20. Two exemplary software applications 13 and 16 installed at mobile device 20 are shown within flash memory 116. Each application comprises one or more application modules. An application module is a component (when more than one module exists) or totality (when only one module exists) of the compiled or executable image of an application. Each module comprises compiled or executable code stored in an electronic file such as a DLL, .EXE or proprietary .COD file. When more than one application module exists, each module represents an aspect of the application, such as main application logic, graphics, and/or language resources (e.g. English or French text) for example. Referring to FIG. 2, it can be seen that the first software application 13 comprises three application modules 14-1, 14-2 and 14-3 which collectively comprise the executable image 14 of application 13. The second software application 16 comprises only one application module 17 which comprises the totality of the executable image of application 16.

As is also shown in FIG. 2, application 13 also comprises metadata 15. Metadata 15 describes the compatibility of each of the three constituent application modules 14-1, 14-2 and 14-3 of application 13 with one or more characteristics of a mobile communication device to which installation of the application 13 may be attempted. The metadata 15 may be referred to as "compatibility metadata". In particular, compatibility is described in relation to at least two mobile communication device characteristics.

The first mobile communication device characteristic is device model. The term "model" refers to one or more aspects of the hardware architecture of a mobile communication device, including but not limited to one or more of the following characteristics: the identity of a processor or chipset of the device; a memory capacity; a screen resolution of a display of the device; audio capability; supported audio or video formats; GPS enablement; WiFi™ enablement; Bluetooth™ enablement; SMS enablement; MMS enablement; media player enablement; the presence of camera and, if present, camera features (e.g. still, video, resolution); and keyboard type. For convenience, the model may be identified or referenced by a name or trademark by which that model of device are sold commercially (e.g. Bold™ or Curve™) or by a series number assigned to variations of the devices sold under that name or trademark (e.g. the Bold™ may be known as the "9000 series" of device).

The second mobile communication device characteristic is the version of an application programming interface (API) of the device operating system, or "API version". The API version is indicative of the APIs available for invocation by software applications such as applications 13 and 16. These APIs may provide various types of functionality, e.g. relating to memory management, screen rendering, and video and audio playback, to name but a few examples. Generally speaking, the higher API version number, the richer the set of available functions, although this is not a hard and fast rule. The operating system APIs may alternatively be referred to as the "platform" of the device.

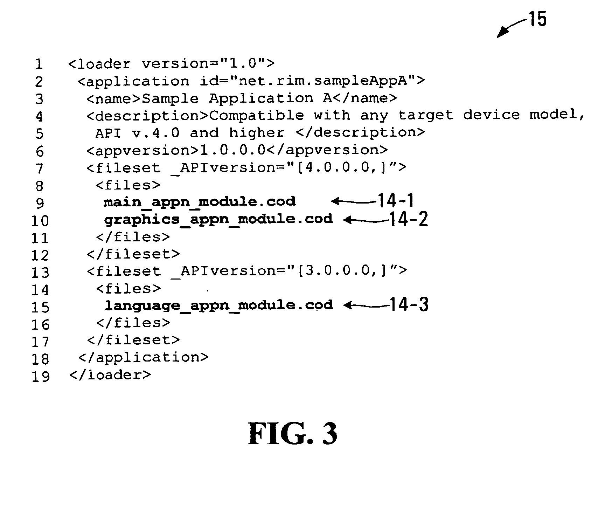

Metadata 15 is illustrated in more detail in FIG. 3. As illustrated, the metadata 15 takes the form of a markup language document in the present embodiment. Specifically, metadata 15 takes the form of an Extensible Markup Language (XML) document. The document may be contained in one or more electronic files. Within the exemplary document of FIG. 3, the application is represented by XML element <application> spanning lines 2-18. Each of the three application modules 14-1, 14-2 and 14-3 is represented as a filename of the file containing the respective module, ending with a .cod extension. These filenames are indicated in bold type in FIG. 3 for clarity. The filenames are grouped into two file sets within the document, each fileset being represented by a <fileset> element. The first file set spans lines 7-12 of FIG. 3 and the second file set spans lines 13-17 of FIG. 3. Each <fileset> element has two attributes.

The first attribute, "series", is used to indicate compatibility of the files (i.e. application modules) represented as bold-face filenames within the file set with one or more mobile communication device models. For example, the attribute series="9000" indicates that the identified application modules are compatible with the "Bold™" model of mobile communication device (Bold™ devices having a model number within the range of 9000-9999). In the present embodiment, the absence of any series attribute indicates that the application modules are compatible with all device models.

The second attribute, "_APIversion", is used to indicate compatibility of the each of the files represented within the file set with one or more API versions. It is possible to indicate compatibility with a particular API version only, all API versions lower than a particular API version, or all API versions higher than a particular API version. Advantageously, the specification of these compatibility attributes at the file set level permits the attributes to be specified only once for the file set, with the attributes being understood to apply to each of (potentially multiple) files within the file set. Alternative embodiments could express these attributes on a per-file basis. Metadata 15 may be represented according to other markup language schemas or in forms other than markup language documents in other embodiments.

Referring to FIG. 3, the opening "fileset" tag of the first file set, at line 7, has no series attribute. This absence of the series attribute indicates that the application modules enumerated at lines 9 and 10 (i.e. modules 14-1 and 14-2, or files main_appn_module.cod file and graphics_appn_module.cod respectively) are compatible with all device models. The '_APIversion="[4.0.0.0,]'" indicates that the modules 14-1 and 14-2 are compatible with API versions 4.0 and higher. The "and higher" qualifier reflects a presumption that later API versions will be backwardly compatible with API version 4.0. Such backward compatibility does not necessarily exist in all embodiments. Filenames of files containing application modules are shown in bold text in FIG. 3.

Using similar conventions, the <fileset> tag of the first file set, at line 13 of FIG. 3, indicates that the application module 14-3 (or the language_appn_module.cod file) is compatible with all device models and is compatible with API versions 3.0 and higher.

It will be appreciated that the metadata associated with any installed application such as application 13 should indicate, at the very least, that its application module(s) are compatible with the model and API version of the device 20. If it were otherwise, the software application might have been considered to be incompatible with the device 20, and no installation might have occurred.

Metadata 15 may have been created by the developer of software application 13 and bundled with the application modules 14 upon installation. It is noted that storage of metadata 15 in association with the modules 14 in the memory of the device to which the software application 13 has been installed may be unconventional. That is, conventional installation of software applications at the time of this writing may be considered to involve no such storage of metadata 15 onto the device.

Referring again to FIG. 2, it can be seen that the second software application 16 lacks any metadata akin to metadata 15. This may be because the developer of that application 16 has not provided such metadata along with the application.

Flash memory 116 also includes application data 113 and 115, which has been generated by software applications 13 and 16 respectively during use of those applications at device 20.

In FIG. 2, communication functions, including data and voice communications, are performed through the communication subsystem 100, and possibly through the short-range communications subsystem 102. The communication subsystem 100 includes a receiver 150, a transmitter 152 and one or more antennae, illustrated as a receive antenna 154 and a transmit antenna 156. In addition, the communication subsystem 100 also includes a processing module, such as a digital signal processor (DSP) 158, and local oscillators (LOs) 160. The specific design and implementation of the communication subsystem 100 is dependent upon the communication network in which the mobile device 20 is intended to operate. For example, the communication subsystem 100 of the mobile device 20 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communications Service (PCS), Global System for Mobile Communications (GSM), etc. Other types of data and voice networks, both separate and integrated, may also be utilized with the mobile device 20.

Network access requirements vary depending upon the type of communication system. For example, in the Mobitex™ and DataTAC™ networks, mobile devices are registered on the network using a unique Personal Identification Number (PIN) associated with each device. In GPRS networks, however, network access is associated with a subscriber or user of a device. A GPRS device therefore requires a subscriber identity module, commonly referred to as a Subscriber Identity Module (SIM) card, in order to operate on a GPRS network.

When required network registration or activation procedures have been completed, the mobile device 20 may send and receive communication signals over the communication network 110. Signals received from the communication network 110 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the network 110 are processed (e.g., modulated and encoded) by the DSP 158 and are then provided to the transmitter 152 for digital to analog conversion, frequency up conversion, filtering, amplification and transmission to the communication network 110 (or networks) via the transmit antenna 156.

In addition to processing communication signals, the DSP 158 provides for control of the receiver 150 and the transmitter 152. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 100 and is input to the microprocessor 128. The received signal is then further processed by the microprocessor 128 for an output to the display 126, or alternatively to some other auxiliary I/O devices 106. A device user may also compose data items, such as e-mail messages, using the keyboard 114 and/or some other auxiliary I/O device 206, such as a touchpad, a rocker switch, a thumb-wheel, or some other type of input device. The composed data items may then be transmitted over the communication network 110 via the communication subsystem 100.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the device 20. In addition, the display 126 may also be utilized in voice communication mode, for example, to display the identity of a calling party, the duration of a voice call, or other voice call related information.

The short-range communications subsystem 102 enables communication between the mobile device 20 and other proximate systems or devices, which need not necessarily be similar devices. For example, the short-range communications subsystem may include an infrared device and associated circuits and components, or a Bluetooth™ communication module to provide for communication with similarly-enabled systems and devices.

Referencing FIG. 1 once again, it can be seen that the model of mobile device 20 is "Bold™" and the API version of device 20 is 5.0. These parameters are stored in memory of the device 20 so as to permit the device 20 to ascertain its own model and API version or to communicate that information to others. The second mobile communication device 40 is similar to the first device illustrated in detail in FIG. 2, except that its model is "Curve™" and its API version is 4.0. As well, the device 40 is initially presumed not to have either of software applications 13 or 16 in its flash memory 116.

The serial ports 108 of both of mobile devices 20 and 40 are connected to serial ports 208 and 209 respectively of a computer 200, e.g. by way of cables. The ports 108, 208 and 209 may be other types of ports that are not serial ports (e.g. USB ports). In the invention wireless connections (e.g. WiFi™ or Bluetooth™) are used instead of interconnecting cables. Computer 200 is responsible for back-up of software applications from mobile device 20 and restoration of at least one application to mobile device 40. Computer 200 may be, for example, a personal computer with a display 202, a keyboard 204, and a mouse 206. The computer 200 controls back-up of software applications from device 20 in the present embodiment. The computer 200 may have a disk reader 210 and a disk writer 212, which may be combined in a single hardware component in some embodiments. A processor 220 of the computer may execute software loaded from a computer-readable medium such as a disk 222 inserted into disk reader 210. Equally, the processor 220 could execute software loaded from another computer-readable medium from another source, such as a file downloaded from a remote computer memory over a network, such as the public Internet The processor 220 may control disk writer 212 to write a disk 224.

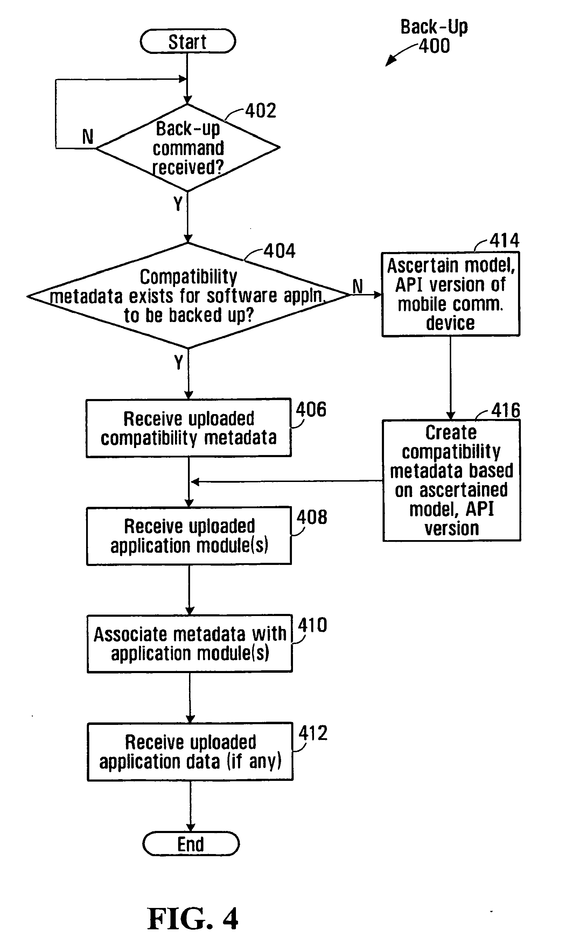

The software executed by processor 220 includes docking software. Turning to FIG. 4, along with FIGS. 1 and 2, with the processor 220 operating under control of the docking software, operation 400 for backing up a software application 13 or 16 is illustrated. The back-up facilitates restoration of the application either to the same mobile communication device, e.g. in the event of inadvertent erasing of memory at that device, or to a second mobile communication device, e.g. when a user elects to retire the first device and use the second device instead.

It is assumed that communication with mobile device 20 has been initiated following connection of the port 208 of the computer to the port 108 of the device 20. The software may initially present a graphical user interface or "GUI" (not expressly illustrated) on display 202 listing software applications presently installed on the mobile device 20 and providing an option for a user to enter a command to cause one or more selected applications to be backed up. The computer 200 may intercommunicate with device 20 to obtain a list applications for which back-up is available.

If a back-up command is received (402, FIG. 4), the docking software intercommunicates with the mobile device 20 in order to determine whether compatibility metadata exists at device 20 for the application whose back-up has been requested (404, FIG. 4). If such metadata exists (e.g. as is the case for software application 13, which has associated metadata 15), then the computer 200 issues commands to device 20 to cause the metadata to be uploaded to computer 200 and receives the uploaded metadata (406, FIG. 4). The computer 200 then issues commands to device 20 to cause the application's module(s) be uploaded to computer 200 and receive the uploaded modules (408, FIG. 4). Thereafter, the uploaded metadata is associated with the uploaded application modules (410, FIG. 4). The association may be achieved in various ways, e.g. by storing the metadata and modules in a common file or directory, by applying a naming convention to the metadata and module files, or in other ways. Thereafter, the computer 200 issues commands to device 20 to cause any application data associated with the relevant application to be uploaded from device 20 (412, FIG. 4), with operation 400 thus being terminated.

If it is instead determined at 404, FIG. 4 that no compatibility metadata exists at device 20 for the selected application, then computer 200 issues commands to device 20 to ascertain the model and API version of the device 20 (414, FIG. 4). Thereafter, the ascertained model and API version are used to create compatibility metadata for the relevant application (416, FIG. 4). The purpose of the created metadata is to capture the fact that, at the very least, the relevant application is compatible with the model and API version of the mobile device 20 from which it is being backed up. In particular, the compatibility of the each application module with the ascertained model of mobile device 20 is encoded within the metadata 18, and the compatibility of each application module with the ascertained API version of device 20 is also encoded within the metadata 18. In the present embodiment, this encoding is effected by writing to the markup language document used to represent metadata 18-specifically, by setting markup language attributes within that document (see below). The remaining operation 408-412 is as described above.

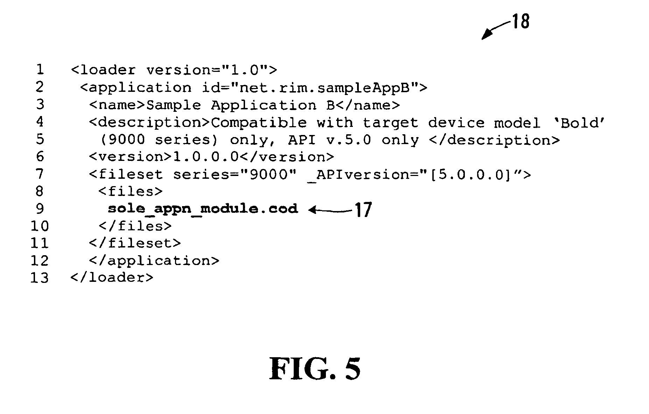

For example, if the user had selected software application 16 to be backed up, the determination at 404, FIG. 4 would find no associated compatibility metadata in existence at device 20. Thereafter, it would be ascertained at 414, FIG. 4 that model and API version of the device 20 are "Bold™" (i.e. 9000 series) and v.5.0 respectively. Thereafter, the ascertained model and API version would be used to create compatibility metadata 18, as illustrated in FIG. 5.

Referring to FIG. 5, it can be seen that metadata 18 follows the format of metadata 15 of FIG. 3. The sole application module 17, as represented by name sole_appn_module.cod of the file in which the module is stored, is shown in bold type (for readability) at line 9. That filename is contained by a fileset which spans lines 7-11. The setting of the first attribute of the <fileset> element to 'series="9000"' is based on the fact that the model of device 20 was ascertained at 414, FIG. 4 to be "Bold™" (i.e. 9000 series). This attribute value indicates that the modules contained by the fileset, i.e. module 17, is compatible with that model. Similarly, the setting of the second attribute to '_APlversion="[5.0.0.0]'" is based on the fact that the API version of device 20 was ascertained at 414, FIG. 4 to be 5.0. The attribute values indicates that the module 17 is compatible with that API version. In some embodiments, the latter attribute could alternatively be set to indicate that the application module 17 is compatible with API versions 5.0 or higher. That would reflect a presumption that future API versions will be backwardly compatible with API version 5.0. As a general rule, backwards compatibility is the less conservative approach, because compatibility of the application with all future API versions with cannot be known with absolute certainty when those API versions have not yet been created.

With the back-up complete, the user could, for example, store the backed-up applications 13 and 16, complete with metadata 15 and 18 respectively, to a computer readable medium, such as disk 224 (FIG. 1). Alternatively, the user could dock a new mobile device 40 and seek to restore one or more of the backed-up applications 13 and 16 to that target device 40.

If it is desired to restore either of the backed-up software applications 13 or 16 to a target device, the stored metadata 15 or 18 is used to check the compatibility of the application 13 or 16 (respectively) with the target device prior to restoring the relevant application. This prevents any bandwidth from being consumed for sending the application module(s) to the target device until it is known that the module(s) will be compatible with target device. Compatibility checking is performed in the same way regardless of whether the metadata was pre-existing (like metadata 15) or created during back-up (like metadata 18). For example, assuming that restoration of software application 13 is desired and that mobile device 40 is the target device, the metadata 15 is used to check the compatibility of each of the backed-up application modules 14-1, 14-2 and 14-3 with both the model and API version of the device 40. Only upon establishing compatibility of each module with the target device is the software restored to that device 40. Similarly, if it is desired to restore the backed-up software application 16 to device 40, the metadata 18 that was created upon back-up is used in like fashion to check the compatibility of the application module 17 with the mobile device 40 prior to, and as a precondition of, restoration.

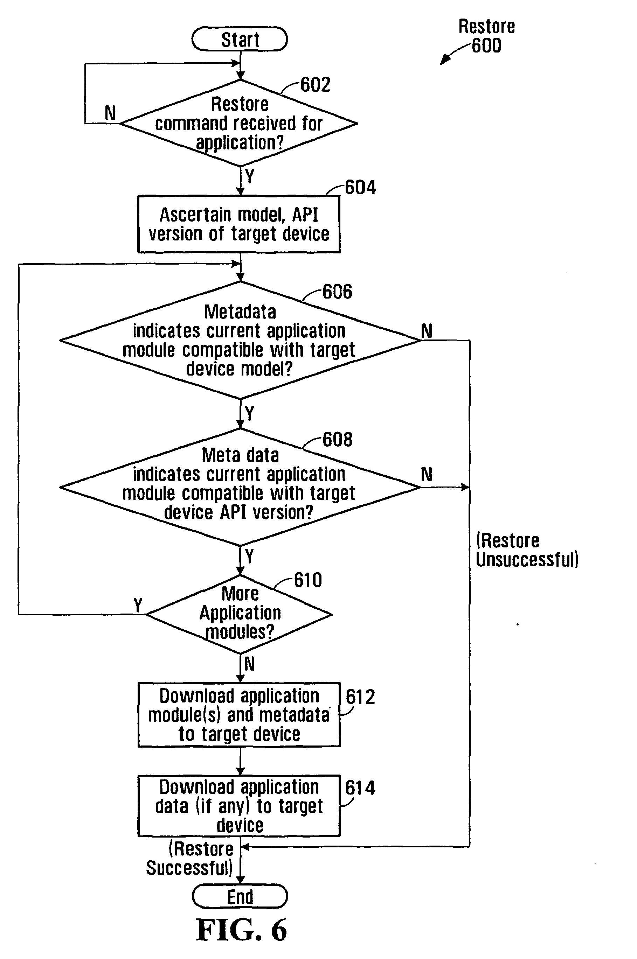

More specifically, operation 600 of computer 200 for restoring a software application to a target device is illustrated as a flowchart in FIG. 6. If a restore command is received (602, FIG. 6), then computer 200 issues commands to target device 40 to ascertain the model and API version of the device (604, FIG. 5). The device 40 communicates its model and API version, i.e. "Curve™" (the "8300 series") and "v.4.0" respectively in the present example. Thereafter, on a per application module basis, the metadata associated with the application to be restored is read (e.g. the "series" and "_APlversion" attributes are read) to ascertain whether the current application module is compatible with the model and API version of the target device as ascertained above (606, 608, FIG. 6). This is repeated for each application module comprising the software application to be restored (610, FIG. 6). Only upon establishing compatibility of each module with the model and API version of the target device is the software application restored to that device. Restoration involves downloading of the application module(s) and metadata comprising the application to the target device (612, FIG. 6). The metadata is downloaded so that, in the event that the application is ever backed-up from device 40, the metadata can form part of the backed-up software application. In this way, the compatibility metadata is "propagated" along with the software application during the back-up and restore process, possibly across a number of different devices.

Based on the compatibility metadata 15 and 18 of the above example, restoration of the first software application 13 to device 40 would succeed in view of the indicated compatibility of each of its application modules 14-1, 14-2 and 14-3 with both the model and API version of the target device 40. In contrast, restoration of the second software application 16 to device 40 would not succeed in view of the indicated incompatibility of application module 17 with both the model and the API version of the target device.

Restoration may also involve downloading of backed-up application data to the target device (614, FIG. 6), although this is optional. If the backed-up application data was generated by the backed-up software application, then compatibility between the two is usually assured because the data will have been generated and/or used by the software application on the former device 20 prior to its back-up.

It is noted that operation 600 can be performed the same way regardless of whether the software application is being restored to a new device, i.e. a device upon which the software application was not previously installed, or to an existing device, i.e. a device upon which the software application was previously installed but whose memory may be have been damaged or erased.

It some embodiments, the computer 200 may check whether the software application already exists on a target device before proceeding with operation 600. If the software application is found to already exist on the target device, the user may be asked to confirm that restoration operation 600 should proceed. If the user wishes to proceed with the restoration, the software application being restored may or may not overwrite the existing software application, depending upon the particular embodiment. If the user confirms that restoration should proceed and the backed-up application is an older version of the application than that found on the target device, then the restoration software may apprise the user that any application data already on the target device 40 may be unreadable by the restored application. The reason is that the format of application data may change between application versions, such that the older application version may be unable to read any application data existing on the target device, which may have been generated by the newer application version. If that is the case, and if it is not possible to "downgrade" the existing target device application data to match the version of the software application that is being restored, it may be considered that restoration of the application would be undesirable or that user confirmation should be sought before restoration is performed. This is in view of the potential loss of readability of the existing target device application data.

If, on the other hand, the software application to be restored is a newer version of the software application than that found on the target device, existing application data on the target device will usually not be lost. The reason is that most (although not necessarily all) software applications are developed so as to be able to read application data generated by earlier application versions.

The term "mobile communication device" as used herein is understood to refer to various types of mobile or handheld devices that can be used for communication, possibly along with other purposes, including but not limited to smartphones, personal digital assistants (PDAs), mobile or cellular telephones, two-way pagers and the like. The term "computer" as used herein is understood to refer to computing devices of various types, including but not limited to personal computers, notebook or laptop computers, netbooks, tablet computers, servers, workstations, and the like.

Other modifications will be apparent to those skilled in the art.

## Claims

1. A method (400), at a computer (200), of handling back-up of a software application (13; 16) from a mobile communication device (20) that is interconnected, via a wireless connection, with the computer (200), the method comprising:
uploading (408), from the mobile communication device, a plurality of application modules (14-1, 14-2, 14-3; 17) collectively comprising the software application;
generating (416), at said computer (200), metadata (15) describing, for each of said application modules (14-1, 14-2, 14-3), a compatibility of said application module with at least one mobile communication device model and a compatibility of said application module with at least one application programming interface 'API' version of a mobile communication device operating system; and
associating (410) said uploaded application modules (14-1, 14-2,14-3; 17) with said metadata (15; 18),
wherein said generating (416) comprises:
ascertaining (414) a model of said mobile communication device and an API version of the operating system of said mobile communication device, said ascertaining comprising intercommunicating with said mobile communication device (20); and
for each of said application modules of said plurality:
encoding, within said metadata (18), a compatibility of said application module with the ascertained model of said mobile communication device; and
further encoding, within said metadata (18), a compatibility of said application module with the ascertained API version of the operating system of said mobile communication device.

2. The method of claim 1 wherein said metadata comprises a markup language file and wherein said encoding and said further encoding comprise writing to said markup language file.

3. The method of claim 1 or claim 2 wherein each of said application modules (14-1, 14-2, 14-3; 17) is stored in a respective electronic file.

4. The method of any one of claims 1 to 3 further comprising uploading (412), from the mobile communication device (20), application data (113; 115) generated by the software application (13; 16).

5. A method (600), at a computer (200), of restoring, to a target mobile communication device (40) that is interconnected, via a wireless connection, with said computer (200), a software application (13; 16) previously backed-up from a mobile communication device (20), the method comprising:
ascertaining (604) a model of said target mobile communication device and an application programming interface 'API' version of the operating system of said target mobile communication device, said ascertaining comprising intercommunicating with said mobile communication device (20); and
using metadata (15) associated with said backed-up software application, verifying (606, 608), for each of a plurality of application modules (14-1., 14-2, 14-3) collectively comprising the backed-up software application:
a compatibility of said application module with the ascertained model of said target mobile communication device; and
a compatibility of said application module with the ascertained API
version of said target mobile communication device; and
if said verifying is successful, downloading (612) said application modules (14-1, 14-2, 14-3) and said metadata (15) to said target mobile communication device (40).

6. The method of claim 5 further comprising, if said verifying is successful, downloading (614), to the target mobile communication device (40), application data previously generated by the software application (113; 115).

7. A computer (200) comprising a processor (220) and configured with a means for handling back-up of a software application (13; 16) from a mobile communication device (20) that is interconnected, via a wireless connection with the computer (200), the computer further comprising:
means for uploading (40a), from the mobile communication device, a plurality of application modules (14-1, 14-2, 14-3; 17) collectively comprising the software application;
means for generating (416), at said computer (200), metadata (15) describing, for each of said application modules (14-1, 14-2, 14-3), a compatibility of said application module with at least one mobile communication device model and a compatibility of said application module with at least one application programming interface 'API' version of a mobile communication device operating system; and
means for associating (410) said uploaded application modules (14-1, 14-2, 14-3; 17) with said metadata (15; 18),
wherein said generating (416) comprises:
ascertaining (414) a model of said mobile communication device and an API version of the operating system of said mobile communication device, said ascertaining comprising intercommunicating with said mobile communication device (20); and
for each of said application modules of said plurality:
encoding, within said metadata (18), a compatibility of said application module with the ascertained model of said mobile communication device; and
further encoding, within said metadata (18), a compatibility of said application module with the ascertained API version of the operating system of said mobile communication device.

8. A computer (200) comprising a processor (220) and configured with a means for restoring, to a target mobile communication device (40) that is interconnected, via a wireless connection with said computer (200), a software application (13; 16) previously backed-up from a mobile communication device (20), the computer further comprising:
means for ascertaining (604) a model of said target mobile communication device and an application programming interface 'API' version of the operating system of said target mobile communication device, said ascertaining comprising intercommunicating with said mobile communication device (20); and
means for, using metadata (15) associated with said backed-up software application, verifying (606, 608), for each of a plurality of application modules (14-1, 14-2, 14-3) collectively comprising the backed-up software application:
a compatibility of said application module with the ascertained model of said target mobile communication device; and
a compatibility of said application module with the ascertained API
version of said target mobile communication device; and
if said verifying is successful, means for, downloading (612) said application modules (14-1, 14-2, 14-3) and said metadata (15) to said target mobile communication device (40).

9. A computer-readable medium (222) storing software that, when executed by a processor (220) of a computer (200), causes said computer to perform the steps of the method of any one of claims 1 to 6.

## Patentansprüche

1. Verfahren (400), an einem Computer (200), zum Handhaben einer Sicherung bzw. eines Backups einer Software-Anwendung (13; 16) von einer mobilen Kommunikationsvorrichtung (20), die über eine drahtlose Verbindung mit dem Computer (200) verbunden ist, wobei das Verfahren aufweist:
Hochladen (408), von der mobilen Kommunikationsvorrichtung, einer Vielzahl von Anwendungsmodulen (14-1, 14-2, 14-3; 17), die gemeinsam die Software-Anwendung aufweisen;
Erzeugen (416), an dem Computer (200), von Metadaten (15), die für jedes der Anwendungsmodule (14-1, 14-2, 14-3) eine Kompatibilität des Anwendungsmoduls mit zumindest einem mobilen Kommunikationsvorrichtungs-Modell und eine Kompatibilität des Anwendungsmoduls mit zumindest einer "API (application Programming Interface)"-Version eines Betriebssystems der mobilen Kommunikationsvorrichtung beschreiben; und Assoziieren (410) der hochgeladenen Anwendungsmodule (14-1, 14-2, 14-3; 17) mit den Metadaten (15; 18),
wobei das Erzeugen (416) aufweist:
Feststellen (414) eines Modells der mobilen Kommunikationsvorrichtung und einer API-Version des Betriebssystems der mobilen Kommunikationsvorrichtung, wobei das Feststellen aufweist ein Kommunizieren mit der mobilen Kommunikationsvorrichtung (20); und
für jedes der Anwendungsmodule a us der Vielzahl:
Codieren, in den Metadaten (18), einer Kompatibilität des Anwendungsmoduls mit dem festgestellten Modell der mobilen Kommunikationsvorrichtung; und
weiteres Codieren, in den Metadaten (18), einer Kompatibilität des Anwendungsmoduls mit der festgestellten API-Version des Betriebssystems der mobilen Kommunikationsvorrichtung.

2. Verfahren gemäß Anspruch 1, wobei die Metadaten eine Auszeichnungssprachedatei aufweisen und wobei das Codieren und das weitere Codieren ein Schreiben in die Auszeichnungssprachedatei aufweisen.

3. Verfahren gemäß Anspruch 1 oder Anspruch 2, wobei jedes der Anwendungsmodule (14-1, 14-2, 14-3; 17) in einer jeweiligen elektronischen Datei gespeichert ist.

4. Verfahren gemäß der Ansprüche 1 bis 3, das weiter aufweist ein Hochladen (412), von der mobilen Kommunikationsvorrichtung (20), von Anwendungsdaten (113; 115), die durch die Software-Anwendung (13; 16) erzeugt werden.

5. Verfahren (600), an einem Computer (200), zum Wiederherstellen, für eine mobile Ziel-Kommunikationsvorrichtung (40), die über eine drahtlose Verbindung mit dem Computer (200) verbunden ist, einer Software-Anwendung (13; 16), die zuvor von einer mobilen Kommunikationsvorrichtung (20) gesichert wurde (backed-up), wobei das Verfahren aufweist:
Feststellen (604) eines Modells der mobilen Ziel-Kommunikationsvorrichtung und einer API(Application Programming Interface)-Version des Betriebssystems der mobilen Ziel-Kommunikationsvorrichtung, wobei das Feststellen aufweist ein Kommunizieren mit der mobilen Kommunikationsvorrichtung (20); und
unter Verwendung von Metadaten (15), die mit der gesicherten Software-Anwendung assoziiert sind, Verifizieren (606, 608), für jedes einer Vielzahl von Anwendungsmodulen (14-1, 14-2, 14-3), die gemeinsam die gesicherte Software-Anwendung aufweisen:
einer Kompatibilität des Anwendungsmoduls mit dem festgestellten Modell der mobilen Ziel-Kommunikationsvorrichtung; und
einer Kompatibilität des Anwendungsmoduls mit der festgestellten API-Version der mobilen Ziel-Kommunikationsvorrichtung; und
wenn das Verifizieren erfolgreich ist, Herunterladen (612) der Anwendungsmodule (14-1, 14-2, 14-3) und der Metadaten (15) auf die mobile Ziel-Kommunikationsvorrichtung (40).

6. Verfahren gemäß Anspruch 5, das weiter aufweist, wenn das Verifizieren erfolgreich ist, ein Herunterladen (614), auf die mobile Ziel-Kommunikationsvorrichtung (40), von Anwendungsdaten, die zuvor von der Software-Anwendung (113; 115) erzeugt wurden.

7. Computer (200), der einen Prozessor (220) aufweist und konfiguriert ist mit einem Mittel zum Handhaben einer Sicherung bzw. eines Backups einer Software-Anwendung (13; 16) von einer mobilen Kommunikationsvorrichtung (20), die über eine drahtlose Verbindung mit dem Computer (200) verbunden ist, wobei der Computer weiter aufweist:
Mittel zum Hochladen (408), von der mobilen Kommunikationsvorrichtung, einer Vielzahl von Anwendungsmodulen (14-1, 14-2, 14-3; 17), die gemeinsam die Software-Anwendung aufweisen;
Mittel zum Erzeugen (416), an dem Computer (200), von Metadaten (15), die für jedes der Anwendungsmodule (14-1, 14-2, 14-3) eine Kompatibilität des Anwendungsmoduls mit zumindest einem mobilen Kommunikationsvorrichtungs-Modell und eine Kompatibilität des Anwendungsmoduls mit zumindest einer "API (Application Programming Interface)"-Version eines Betriebssystems der mobilen Kommunikationsvorrichtung beschreiben; und
Mittel zum Assoziieren (410) der hochgeladenen Anwendungsmodule (14-1, 14-2, 14-3; 17) mit den Metadaten (15; 18),
wobei das Erzeugen (416) aufweist:
Feststellen (414) eines Modells der mobilen Kommunikationsvorrichtung und einer API-Version des Betriebssystems der mobilen Kommunikationsvorrichtung, wobei das Feststellen aufweist ein Kommunizieren mit der mobilen Kommumikationsvorrichtung (20); und für jedes der Anwendungsmodule aus der Vielzahl:
Codieren, in den Metadaten (18), einer Kompatibilität des Anwendungsmoduls mit dem festgestellten Modell der mobilen Kommunikationsvorrichtung; und
weiteres Codieren, in den Metadaten (18), einer Kompatibilität des Anwendungsmoduls mit der festgestellten API-Version des Betriebssystems der mobilen Kommunikationsvorrichtung.

8. Computer (200), der einen Prozessor (220) aufweist und konfiguriert ist mit einem Mittel zum Wiederherstellen, für eine mobile Ziel-Kommunikationsvorrichtung (40), die über eine drahtlose Verbindung mit dem Computer (200) verbunden ist, einer Software-Anwendung (13; 16), die zuvor von einer mobilen Kommunikationsvorrichtung (20) gesichert wurde, wobei der Computer weiter aufweist:
Mittel zum Feststellen (604) eines Modells der mobilen Ziel-Kommunikationsvorrichtung und einer API(Application Programming Interface)-Version des Betriebssystems der mobilen Ziel-Kommunikationsvorrichtung, wobei das Feststellen aufweist ein Kommunizieren mit der mobilen Kommunikationsvorrichtung (20); und
Mittel zum, unter Verwendung von Metadaten (15), die mit der gesicherten Software-Anwendung assoziiert sind, Verifizieren (606, 608), für jedes einer Vielzahl von Anwendungsmodulen (14-1, 14-2, 14-3), die gemeinsam die gesicherte Software-Anwendung aufweisen:
einer Kompatibilität des Anwendungsmoduls m it dem festgestellten Modell der mobilen Ziel-Kommunikationsvorrichtung; und
einer Kompatibilität des Anwendungsmoduls mit der festgestellten API-Version der mobilen Ziel-Kommunikationsvorrichtung; und
wenn das Verifizieren erfolgreich ist, Mittel zum Herunterladen (612) der Anwendungsmodule (14-1, 14-2, 14-3) und der Metadaten (15) auf die mobile Ziel-Kommunikationsvorrichtung (40).

9. Computerlesbares Medium (222), das Software speichert, die bei Ausführund durch einen Prozessor (220) eines Computer (200) den Computer veranlasst, die Schritte des Verfahrens gemäß einem der Ansprüche 1 bis 6 durchzuführen.

## Revendications

1. Procédé (400) de gestion, sur un ordinateur (200), de la sauvegarde d'une application logicielle (13 ; 16) à partir d'un dispositif de communication mobile (20) qui est interconnecté à l'ordinateur (200) via une connexion sans fil, le procédé comprenant les étapes consistant à :
à partir du dispositif de communication mobile, télécharger (408) une plurality de modules applicatifs (14-1, 14-2, 14-3 ; 17) constituant collectivement l'application logicielle ;
produire (416) sur ledit ordinateur (200) des métadonnées (15) qui décrivent, pour chacun desdits modules applicatifs (14-1, 14-2, 14-3), une compatibilité dudit module applicatif avec au moins un modèle de dispositif de communication mobile et une compatibilité dudit module applicatif avec au moins une version de l'interface de programmation d'applications, API pour « *Application Programming Interface* », d'un système d'exploitation du dispositif de communication mobile ; et
associer (410) lesdits modules applicatifs (14-1, 14-2, 14-3 ; 17) téléchargés avec lesdites métadonnées (15 ; 18) ;
ladite étape de production (416) comprenant les étapes consistant à :
déterminer (414) un modèle dudit dispositif de communication mobile et une version de l'API du système d'exploitation dudit dispositif de communication mobile, ladite étape de détermination comprenant une intercommunication avec ledit dispositif de communication mobile (20) ; et
pour chacun des modules applicatifs dans ladite pluralité :
coder au sein desdites métadonnées (18) une compatibilité dudit module applicatif avec le modèle déterminé dudit dispositif de communication mobile ; et
coder en supplément dans lesdites métadonnées (18) une compatibilité dudit module applicatif avec la version de l'API déterminée pour le système d'exploitation dudit dispositif de communication mobile.

2. Procédé selon la revendication 1, dans lequel lesdites métadonnées consistent en un fichier de langage de balisage et dans lequel lesdites étapes de codage et de codage supplémentaire consistent en une écriture dans ledit fichier de langage de balisage.

3. Procédé selon la revendication 1 ou la revendication 2, dans lequel chacun desdits modules applicatifs (14-1, 14-2, 14-3 ; 17) est stocké dans un fichier électronique respectif.

4. Procédé selon l'une quelconque des revendications 1 à 3, comprenant en outre l'étape consistant à télécharger (412) à partir du dispositif de communication mobile (20), des données applicatives (113 ; 115) produites par l'application logicielle (13 ; 16).

5. Procédé (600) exécuté sur un ordinateur (200) afin de restaurer vers un dispositif de communication mobile de destination (40) qui est interconnecté par une connexion sans fil, à l'aide dudit ordinateur (200), une application logicielle (13 ; 16) qui avait au préalable été sauvegardée à partir d'un dispositif de communication mobile (20), le procécé comprenant les étapes consistant à :
déterminer (604) un modèle dudit dispositif de communication mobile de destination et une version de l'API du système d'exploitation dudit dispositif de communication mobile de destination, ladite étape de détermination comprenant une intercommunication avec ledit dispositif de communication mobile (20) ; et
à l'aide de métadonnées (15) associées à ladite application logicielle sauvegardée, vérifier (606, 608), pour chacun des modules applicatifs (14-1, 14-2, 14-3) composant collectivement l'application logicielle sauvegardée :
une compatibilité dudit module applicatif avec le modèle déterminé du dispositif de communication mobile de destination ; et
une compatibilité dudit module applicatif avec la version de l'API déterminée pour ledit dispositif de communication mobile de destination ; et
si ladite étape de vérification est positive, télécharger (612) lesdits modules applicatifs (14-1, 14-2, 14-3) et lesdites métadonnées (15) vers ledit dispositif de communication mobile de destination (40).

6. Procédé selon la revendication 5, comprenant en outre, si ladite étape de vérification est positive, l'étape consistant à télécharger (614) vers le dispositif de communication mobile de destination (40) des données applicatives précédemment produites par l'application logicielle (113 ; 115).

7. Ordinateur (200) comprenant un processeur (220) et configuré avec un moyen destiné à gérer la sauvegarde d'une application logicielle (13 ; 16) à partir d'un dispositif de communication mobile (20) qui est interconnecté par une connexion sans fil avec l'ordinateur (200), l'ordinateur comprenant en outre :
un moyen destiné à télécharger (408), à partir du dispositif de communication mobile, une pluralité de modules applicatifs (14-1, 14-2, 14-3 ; 17) constituant collectivement l'application logicielle ;
un moyen destiné à produire (416) sur ledit ordinateur (200) des métadonnées (15) qui décrivent, pour chacun desdits modules applicatifs (14-1, 14-2, 14-3), une compatibilité dudit module applicatif avec au moins un modèle de dispositif de communication mobile et une compatibilité dudit module applicatif avec au moins une version de l'API d'un système d'exploitation du dispositif de communication mobile ; et
un moyen destiné à associer (410) lesdits modules applicatifs (14-1, 14-2, 14-3 ; 17) téléchargés avec lesdites métadonnées (15 ; 18) ;
ladite étape de production (416) comprenant les étapes consistant à :
déterminer (414) un modèle dudit dispositif de communication mobile et une version de l'API du système d'exploitation dudit dispositif de communication mobile, ladite étape de détermination comprenant une intercommunication avec ledit dispositif de communication mobile (20) ; et
pour chacun des modules applicatifs dans ladite pluralité :
coder au sein desdites métadonnées (18) une compatibilité dudit module applicatif avec le modèle déterminé dudit dispositif de communication mobile ; et
coder en supplément dans lesdites métadonnées (18) une compatibilité dudit module applicatif avec la version de l'API déterminée pour le système d'exploitation dudit dispositif de communication mobile.

8. Ordinateur (200) comprenant un processeur (220) et configuré avec un moyen destiné à restaurer vers un dispositif de communication mobile de destination (40) qui est interconnecté par une connexion sans fil avec l'ordinateur (200), une application logicielle (13 ; 16) qui avait au préalable été sauvegardée à partir d'un dispositif de communication mobile (20), l'ordinateur comprenant en outre :
un moyen destiné à déterminer (604) un modèle dudit dispositif de communication mobile de destination et une version de l'API du système d'exploitation dudit dispositif de communication mobile de destination, ladite détermination comprenant une intercommunication avec ledit dispositif de communication mobile (20) ; et
un moyen destiné à, en utilisant des métadonnées (15) associées à ladite application logicielle sauvegardée, vérifier (606, 608), pour chacun des modules applicatifs (14-1, 14-2, 14-3) composant collectivement l'application logicielle sauvegardée :
une compatibilité dudit module applicatif avec le modèle déterminé du dispositif de communication mobile de destination ; et
une compatibilité dudit module applicatif avec la version de l'API déterminée pour ledit dispositif de communication mobile de destination ; et
si ladite étape de vérification est positive, un moyen destiné à télécharger (612) lesdits modules applicatifs (14-1, 14-2, 14-3) et lesdites métadonnées (15) vers ledit dispositif de communication mobile de destination (40).

9. Support lisible par ordinateur (222) et portant du logiciel qui, lorsqu'il est exécuté par un processeur (220) d'un ordinateur (200), commande audit ordinateur d'exécuter les étapes du procédé selon l'une quelconque des revendications 1 à 6.
